# EUROPEAN PATENT SPECIFICATION

(11) **EP 4 178 059 B1**
(45) Date of publication and mention of the grant of the patent: **01.07.2026**
(21) Application number: 21207051.0
(22) Date of filing: 09.11.2021
(51) Int. Cl.: H02J 1/10, H02J 1/102

(54) **POWER SUPPLY AND METHOD OF OPERATING THE SAME**
STROMVERSORGUNGSSYSTEM UND VERFAHREN ZUM BETRIEB DAVON
ALIMENTATION ET SON PROCÉDÉ DE FONCTIONNEMENT

(43) Date of publication of application: 10.05.2023
(73) Proprietor: Rohde & Schwarz GmbH & Co. KG, 81671 München (DE)
(72) Inventor: Kunisch, Sascha, 63808 Haibach (DE); Weigell, Philipp, 82065 Baierbrunn (DE)
(74) Representative: Novagraaf Group

(56) References cited:
- EP-B1- 0 958 645
- DE-A1- 102016 205 036
- US-A1- 2004 021 441
- US-A1- 2014 266 131
- KUTLUAY K ET AL: "Digital control of universal telecommunication power supplies using dual 8-bit microcontrollers", CONFERENCE RECORD OF THE 2002 IEEE INDUSTRY APPLICATIONS CONFERENCE : 37TH IAS ANNUAL MEETING ; 13 - 18 OCTOBER 2002, PITTSBURGH, PENNSYLVANIA, USA; [CONFERENCE RECORD OF THE IEEE INDUSTRY APPLICATIONS CONFERENCE. IAS ANNUAL MEETING], IEEE SERVICE CE, vol. 2, 13 October 2002 (2002-10-13), pages 1197 - 1204, XP010610032, ISBN: 978-0-7803-7420-1, DOI: 10.1109/IAS.2002.1042710

## Description

### Technical Field

The present disclosure relates to supply of electrical power, and in particular, to a power supply and a method of operating the same.

### Background Art

Depending on the particular use case, electrical output characteristics of power supplies may not always be adequate for required electrical input characteristics of electrical loads. For example, a required load current may exceed a feasible supply current of a given power supply.

This may mandate a deployment of larger and more expensive single power supplies for a sufficient margin, or a combination of a plurality of power supplies (or *per se* separate channels of a same power supply) to achieve the higher current. The latter may, however, be challenging since an interconnection of the plurality may interrelate the associated control loops and/or suffer from component tolerances. In other words, even supplies with a same part number will have slightly different electrical output characteristics, so that the one with e.g. the highest voltage will naturally source the most current. Accordingly, manual correction of settings may be required.

EP 0 958 645 B1 discloses a power supply in accordance with the preamble of independent claim 1. US 2014/266131 A1 and US 2004/021441 A1 disclose comparatively less relevant power supplies.

### Summary

In view of the drawbacks and limitations set out above, the present disclosure aims to improve power supplies of the background art.

This objective is achieved by the embodiments as defined by the appended independent claims. Preferred embodiments are set forth in the dependent claims and in the following description and drawings.

A first aspect of the present disclosure relates to a power supply comprising a plurality of output ports, a respective power regulation unit connected to the respective output port, and a respective control unit connected to the respective power regulation unit. The respective power regulation unit is configured to regulate electrical output characteristics of the respective output port independently of the electrical output characteristics of any other of the plurality of output ports. The electrical output characteristics comprise an output voltage and an output current. A master of the control units is configured to issue target values for respective setpoint variables of the respective output port. The respective control unit is configured to set the respective setpoint variables and to adapt the set setpoint variable for one of its electrical output characteristics in dependence of a deviation of the other of its electrical output characteristics from its target value.

The output ports may be interconnected in parallel, and the respective control unit may be configured to adapt the set setpoint variable for the respective output voltage in dependence of a deviation of the respective output current from its target value.

The output ports may be interconnected in series, and the respective control unit may be configured to adapt the set setpoint variable for the respective output current in dependence of a deviation of the respective output voltage from its target value.

The respective control unit is further configured to adapt the set setpoint variable for the one of its electrical output characteristics in accordance with a given sequence of the control units.

The output ports may comprise one of: alternating-current, AC, output ports, and directed-current, DC, output ports.

The respective control unit may comprise one of: a microcontroller, and a gate array logic.

The power supply may further comprise a galvanic isolation between the control units.

The power supply may further comprise communication means being designed to interconnect the control units across the galvanic isolation.

The communication means may further be designed to interconnect the power regulation units.

The communication means may comprise a bus being configured for real-time communication in less than a settling time of the power regulation units.

The bus may comprise one of: a CAN bus, a MOST bus, and a LIN bus.

The bus may comprise an optical bus.

The bus may comprise an electrical bus including one or more of: an opto-coupler, and a capacitive coupling.

A second aspect of the present disclosure relates to a method of operating a power supply. The power supply comprises: a plurality of output ports, a respective power regulation unit connected to the respective output port, and a respective control unit connected to the respective power regulation unit. The method comprises issuing, by a master of the control units, target values for respective setpoint variables for electrical output characteristics of the respective output port. The electrical output characteristics comprise an output voltage and an output current. The method further comprises setting the respective setpoint variables, regulating the electrical output characteristics of the respective output port independently of the electrical output characteristics of any other of the plurality of output ports, and adapting, by the respective control unit, the set setpoint variable for one of the electrical output characteristics in dependence of a deviation of the other of the electrical output characteristics from its target value, and in accordance with a given sequence of the control units.

### Advantageous Effects

By splitting a required electrical characteristic (current or voltage) of a load into smaller contributions of interconnected supplies (or channels thereof) - defined by target values for respective setpoint variables to be set - and by adapting the respective set setpoint variables in view of deviations of the smaller contributions from their target values, the present disclosure provides improved power supplies with less margin, higher efficiency, improved usability and a better power distribution/sharing among the supplies or channels, which also leads to better signal performance.

The technical effects and advantages described in relation with the power supply equally apply to the method of operating the same having corresponding features.

### Brief Description of Drawings

The above-described aspects and implementations will now be explained with reference to the accompanying drawings, in which the same or similar reference numerals designate the same or similar elements.

The features of these aspects and implementations may be combined with each other unless specifically stated otherwise.

The drawings are to be regarded as being schematic representations, and elements illustrated in the drawings are not necessarily shown to scale. Rather, the various elements are represented such that their function and general purpose become apparent to those skilled in the art.
FIG. 1 illustrates a power supply in accordance with the present disclosure;
FIG. 2 illustrates the power supply of FIG. 1 with parallel-interconnected output ports for current sharing;
FIG. 3 illustrates the power supply of FIG. 1 with serially-interconnected output ports for voltage sharing; and
FIG. 4 illustrates a method of operating the power supply of FIG. 1 in accordance with the present disclosure.

### Detailed Descriptions of Drawings

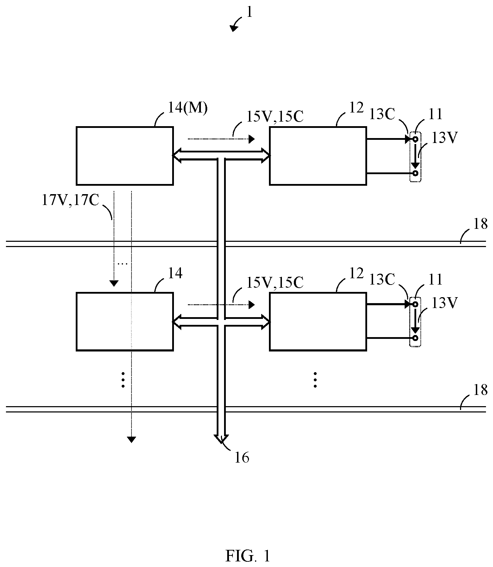

FIG. 1 illustrates a power supply 1 in accordance with the present disclosure.

Generally, the power supply 1 includes a plurality of individual supply channels with a structure akin to one another, which will be explained next.

The power supply 1 comprises a plurality of output ports 11 (on the right in FIG. 1) respectively being indicated by pairs of terminals encircled by dotted lines. The respective pair of terminals may include plus (+) and minus (-)/earth poles.

The output ports 11 may comprise one of: alternating-current (AC) output ports, and directed-current (DC) output ports. Correspondingly, the power supply 1 may be an AC power supply or a DC power supply. A phase alignment among potential AC output ports is out of scope of the present disclosure, but may require further attention.

The power supply 1 further comprises a respective power regulation unit 12 connected to the respective output port 11.

Based on respective control loops, the respective power regulation unit 12 is configured to regulate electrical output characteristics 13V, 13C of the respective output port 11 independently of the electrical output characteristics 13V, 13C of any other of the plurality of output ports 11, based on respective setpoint variables 15V, 15C and respective measured electrical output characteristics 13V, 13C of the respective output port 11. The electrical output characteristics 13V, 13C comprise an output voltage 13V and an output current 13C, and may be measured by the respective control loop or by external means connected to the respective output port 11.

The power supply 1 further comprises a respective control unit 14 connected to the respective power regulation unit 12.

The respective control unit 14 may comprise one of: a microcontroller, and a gate array logic, such as a field-programmable gate array (FPGA) or the like.

A master 14M of the control units 14 is configured to issue target values 17V, 17C for the respective setpoint variables 15V, 15C of the respective output port 11.

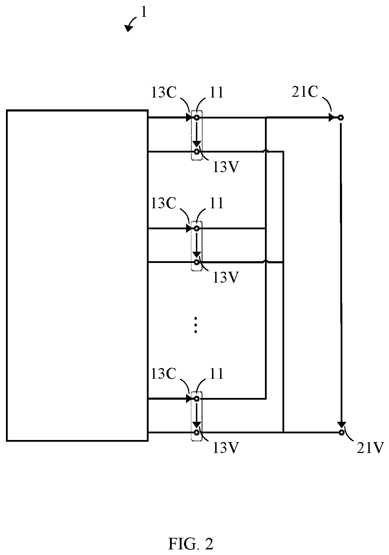

For example, given required electrical load characteristics *V_{Load}, I_{Load}* and current sharing among a plurality of *N* channels, the target values 17V, 17C may include a same target voltage *V_{Load}* for the respective output port 11 and a same target current of *I_{Load}* /*N* for the respective output port 11. The current sharing mode of operation involves an interconnection of the plurality of output ports 11 in parallel in accordance with FIG. 2.

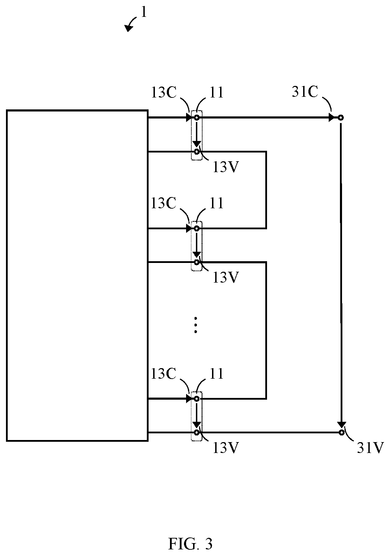

As a further example, given the required electrical load characteristics *V_{Load}, I_{Load}* and voltage sharing among a plurality of N channels, the target values 17V, 17C may include a same target voltage *V_{Load}* / *N* for the respective output port 11 and a same target current of *I_{Load}* for the respective output port 11. The voltage sharing mode of operation involves an interconnection of the plurality of output ports 11 in series in accordance with FIG. 3.

The master 14M may be predetermined, or (s)elected on demand by the control units 14 in order to achieve redundancy in case the master 14M fails. In the latter case, the control units 14 may monitor each other in a similar manner as known from 'Hello' or 'Keepalive' network protocols.

The respective control unit 14 is configured to set the respective setpoint variables 15V, 15C of the respective output port 11, as a notion for a control goal of the respective control loop.

The respective control unit 14 is further configured to adapt the set setpoint variable 15V, 15C for one of its electrical output characteristics 13V, 13C in dependence of a deviation of the other of its electrical output characteristics 13C, 13V from its target value 17C, 17V.

As such, the respective control unit 14 is in the current sharing mode of operation further configured to adapt the set setpoint variable 15V - issued by the master 14M and set by the respective control unit 14 - for the respective output voltage 13V in dependence of a deviation of the respective (measured) output current 13C from its target value 17C. Thus, the channel relating to the master 14M is kept in constant voltage mode, while the channels relating to the other output ports 11 are kept in constant current mode. By adapting the output voltage 13V of the channels relating to the other output ports 11 independently from one another, a symmetric current distribution on the plurality of N channels may be achieved.

Likewise, the respective control unit 14 is in the voltage sharing mode of operation further configured to adapt the set setpoint variable 15C - issued by the master 14M and set by the respective control unit 14 - for the respective output current 13C in dependence of a deviation of the respective (measured) output voltage 13V from its target value 17V. That is to say, the channel relating to the master 14M is kept in constant current mode, while the channels relating to the other output ports 11 are kept in constant voltage mode.

The respective control unit 14 may be configured to adapt the set setpoint variable 15V, 15C for the one of its electrical output characteristics 13V, 13C in accordance with a given sequence of the control units 14, in order to prevent control problems. For example, the sequence may be determined upon activation of a particular mode of operation of the power supply 1, or correspond to a structural arrangement of the plurality of channels within the power supply 1, such as "from left to right" or the like.

The power supply 1 may further comprise a galvanic isolation 18 between the control units 14, in order to enable independent deployment of the plurality of channels of the power supply 1 as well.

The power supply 1 may further comprise communication means 16 being designed to interconnect the control units 14 across the galvanic isolation 18, in order to coordinate an operation of the plurality of channels of the power supply 1. This is indicated by the arrowheads of block arrow 16 pointing to the left and down.

The communication means 16 may further be designed to interconnect the power regulation units 12, in order to save a control time (i.e., minimize a delay) between the plurality of channels of the power supply 1. This is indicated by the arrowheads of block arrow 16 pointing to the right and down.

The communication means 16 may comprise a bus being configured for real-time communication in less than a settling time of the power regulation units 12, in order to coordinate the operation of the plurality of channels of the power supply 1 at least as fast as the control loops (real-time ability).

The bus may comprise one of: a CAN bus, a MOST bus, and a LIN bus, in order to use commercial off-the-shelf supplies as much as possible.

The bus may comprise an optical bus, which is inherently designed to interconnect the control units 14 across the galvanic isolation 18. Alternatively, the bus may comprise an electrical bus including one or more of an opto-coupler and a capacitive coupling across a respective galvanic isolation 18.

FIG. 2 illustrates the power supply 1 of FIG. 1 with parallel-interconnected output ports for current sharing.

As suggested, the output ports 11 may be interconnected in parallel so as to supply a sum *I_{Load}* of the output currents 13C at a same output voltage 13V, *V_{Load}.*

In accordance with the parallel interconnection of the plurality of output ports 11, the respective control unit 14 may be configured to adapt the set setpoint variable 15V for the respective output voltage 13V in dependence of a deviation of the respective output current 13C from its target value 17C.

FIG. 3 illustrates the power supply 1 of FIG. 1 with serially-interconnected output ports for voltage sharing.

Contrary to FIG. 2, the output ports 11 may be interconnected in series so as to supply a sum *V_{Load}* of the output voltages 13V at a same output current 13C, *I_{Load}.*

In accordance with the serial interconnection of the plurality of output ports 11, the respective control unit 14 may be configured to adapt the set setpoint variable 15C for the respective output current 13C in dependence of a deviation of the respective output voltage 13V from its target value 17V.

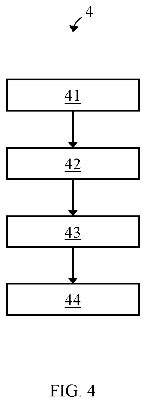

FIG. 4 illustrates a method 4 of operating the power supply 1 of FIG. 1 in accordance with the present disclosure.

The underlying power supply 1 comprises: a plurality of output ports 11, a respective power regulation unit 12 connected to the respective output port 11, and a respective control unit 14 connected to the respective power regulation unit 12.

The method 4 comprises issuing 41, by a master 14M of the control units 14, target values 17V, 17C for respective setpoint variables 15V, 15C for electrical output characteristics 13V, 13C of the respective output port 11. The electrical output characteristics 13V, 13C comprise an output voltage 13V and an output current 13C.

The method 4 further comprises setting 42 the respective setpoint variables 15V, 15C.

The method 4 further comprises regulating 43 the electrical output characteristics 13V, 13C of the respective output port 11 independently of the electrical output characteristics 13V, 13C of any other of the plurality of output ports 11.

The method 4 further comprises adapting 44, by the respective control unit 14, the set setpoint variable 15V, 15C for one of the electrical output characteristics 13V, 13C in dependence of a deviation of the other of the electrical output characteristics 13C, 13V from its target value 17C, 17V.

## Claims

1. A power supply (1), comprising
a plurality of output ports (11);
a respective power regulation unit (12) connected to the respective output port (11) and configured to regulate electrical output characteristics (13V, 13C) of the respective output port (11) independently of the electrical output characteristics (13V, 13C) of any other of the plurality of output ports (11), the electrical output characteristics (13V, 13C) comprising an output voltage (13V) and an output current (13C);
a respective control unit (14) connected to the respective power regulation unit (12) and configured to set respective setpoint variables (15V, 15C) of the respective output port (11);
a master (14M) of the control units (14) configured to issue target values (17V, 17C) for the respective setpoint variables (15V, 15C); and
the respective control unit (14) configured to adapt the set setpoint variable (15V, 15C) for one of its electrical output characteristics (13V, 13C) in dependence of a deviation of the other of its electrical output characteristics (13C, 13V) from its target value (17C, 17V);
**characterized by** the respective control unit (14) configured to adapt the set setpoint variable (15V, 15C) for the one of its electrical output characteristics (13V, 13C) in accordance with a given sequence of the control units (14).

2. The power supply (1) of claim 1,
the output ports (11) being interconnected in parallel; and
the respective control unit (14) configured to adapt the set setpoint variable (15V) for the respective output voltage (13V) in dependence of a deviation of the respective output current (13C) from its target value (17C).

3. The power supply (1) of claim 1,
the output ports (11) being interconnected in series; and
the respective control unit (14) configured to adapt the set setpoint variable (15C) for the respective output current (13C) in dependence of a deviation of the respective output voltage (13V) from its target value (17V).

4. The power supply (1) of any one of the preceding claims,
the output ports (11) comprising one of: alternating-current, AC, output ports, and directed-current, DC, output ports.

5. The power supply (1) of any one of the preceding claims,
the respective control unit (14) comprising one of: a microcontroller, and a gate array logic.

6. The power supply (1) of any one of the preceding claims, further comprising a galvanic isolation (18) between the control units (14).

7. The power supply (1) of claim 6,
communication means (16) being designed to interconnect the control units (14) across the galvanic isolation (18).

8. The power supply (1) of claim 7,
the communication means (16) further being designed to interconnect the power regulation units (12).

9. The power supply (1) of claim 7 or claim 8,
the communication means (16) comprising a bus being configured for real-time communication in less than a settling time of the power regulation units (12).

10. The power supply (1) of claim 9,
the bus comprising one of a CAN bus, a MOST bus, and a LIN bus.

11. The power supply (1) of claim 9 or claim 10,
the bus comprising an optical bus.

12. The power supply (1) of claim 9 or claim 10,
the bus comprising an electrical bus including one or more of: an opto-coupler, and a capacitive coupling.

13. A method (4) of operating a power supply (1),
the power supply (1) comprising:
a plurality of output ports (11), a respective power regulation unit (12) connected to the respective output port (11), and a respective control unit (14) connected to the respective power regulation unit (12);
the method (4) comprising:
issuing (41), by a master (14M) of the control units (14), target values (17V, 17C) for respective setpoint variables (15V, 15C) for electrical output characteristics (13V, 13C) of the respective output port (11), the electrical output characteristics (13V, 13C) comprising an output voltage (13V) and an output current (13C); and
setting (42) the respective setpoint variables (15V, 15C);
regulating (43) the electrical output characteristics (13V, 13C) of the respective output port (11) independently of the electrical output characteristics (13V, 13C) of any other of the plurality of output ports (11);
adapting (44), by the respective control unit (14), the set setpoint variable (15V, 15C) for one of the electrical output characteristics (13V, 13C) in dependence of a deviation of the other of the electrical output characteristics (13C, 13V) from its target value (17C, 17V) , and in accordance with a given sequence of the control units (14).

## Patentansprüche

1. Leistungsversorgung (1), umfassend
eine Vielzahl von Ausgangsanschlüssen (11);
eine jeweilige Leistungsregulierungseinheit (12), die mit dem jeweiligen Ausgangsanschluss (11) verbunden und konfiguriert ist, um elektrische Ausgangsmerkmale (13V, 13C) des jeweiligen Ausgangsanschlusses (11) unabhängig von den elektrischen Ausgangsmerkmalen (13V, 13C) eines beliebigen anderen der Vielzahl von Ausgangsanschlüssen (11) zu regulieren, die elektrischen Ausgangsmerkmale (13V, 13C) umfassend eine Ausgangsspannung (13V) und einen Ausgangsstrom (13C);
eine jeweilige Steuereinheit (14), die mit der jeweiligen Leistungsregulierungseinheit (12) verbunden und konfiguriert ist, um jeweilige Sollwertvariablen (15V, 15C) des jeweiligen Ausgangsanschlusses (11) zu setzen;
einen Master (14M) der Steuereinheiten (14), der konfiguriert ist, um Zielwerte (17V, 17C) für die jeweiligen Sollwertvariablen (15V, 15C) auszugeben; und
wobei die jeweilige Steuereinheit (14) konfiguriert ist, um die gesetzte Sollwertvariable (15V, 15C) für eine ihrer elektrischen Ausgangsmerkmale (13V, 13C) in Abhängigkeit von einer Abweichung der anderen ihrer elektrischen Ausgangsmerkmale (13C, 13V) von ihrem Zielwert (17C, 17V) anzupassen;
**gekennzeichnet durch** die jeweilige Steuereinheit (14), die konfiguriert ist, um die gesetzte Sollwertvariable (15V, 15C) für das eine ihrer elektrischen Ausgangsmerkmale (13V, 13C) gemäß einer gegebenen Sequenz der Steuereinheiten (14) anzupassen.

2. Leistungsversorgung (1) nach Anspruch 1,
wobei die Ausgangsanschlüsse (11) parallel miteinander verbunden sind; und
wobei die jeweilige Steuereinheit (14) konfiguriert ist, um die gesetzte Sollwertvariable (15V) für die jeweilige Ausgangsspannung (13V) in Abhängigkeit von einer Abweichung des jeweiligen Ausgangsstroms (13C) von seinem Zielwert (17C) anzupassen.

3. Leistungsversorgung (1) nach Anspruch 1,
wobei die Ausgangsanschlüsse (11) in Reihe miteinander verbunden sind; und
wobei die jeweilige Steuereinheit (14) konfiguriert ist, um die gesetzte Sollwertvariable (15C) für den jeweiligen Ausgangsstrom (13C) in Abhängigkeit von einer Abweichung der jeweiligen Ausgangsspannung (13V) von ihrem Zielwert (17V) anzupassen.

4. Leistungsversorgung (1) nach einem der vorstehenden Ansprüche, die Ausgangsanschlüsse (11) umfassend eines von: Wechselstromausgangsanschlüssen, AC-Ausgangsanschlüsse, und Gleichstromausgangsanschlüssen, DC-Ausgangsanschlüsse.

5. Leistungsversorgung (1) nach einem der vorstehenden Ansprüche,
die jeweilige Steuereinheit (14) umfassend eines von: einer Mikrosteuerung und einer Gatearray-Logik.

6. Leistungsversorgung (1) nach einem der vorstehenden Ansprüche, ferner umfassend eine galvanische Trennung (18) zwischen den Steuereinheiten (14).

7. Leistungsversorgung (1) nach Anspruch 6,
wobei Kommunikationsmittel (16) ausgelegt sind, um die Steuereinheiten (14) über die galvanische Trennung (18) hinweg miteinander zu verbinden.

8. Leistungsversorgung (1) nach Anspruch 7,
wobei die Kommunikationsmittel (16) ferner ausgelegt sind, um die Leistungsregulierungseinheiten (12) miteinander zu verbinden.

9. Leistungsversorgung (1) nach Anspruch 7 oder 8,
die Kommunikationsmittel (16) umfassend einen Bus, der für Echtzeitkommunikation in weniger als einer Einschwingzeit der Leistungsregulierungseinheiten (12) konfiguriert ist.

10. Leistungsversorgung (1) nach Anspruch 9,
der Bus umfassend einen von einem CAN-Bus, einem MOST-Bus und einem LIN-Bus.

11. Leistungsversorgung (1) nach Anspruch 9 oder 10,
der Bus umfassend einen optischen Bus.

12. Leistungsversorgung (1) nach Anspruch 9 oder 10,
der Bus umfassend einen elektrischen Bus, der eines oder mehrere einschließt von: einem Optokoppler und einer kapazitiven Kopplung.

13. Verfahren (4) zum Betreiben einer Leistungsversorgung (1),
die Leistungsversorgung (1) umfassend:
eine Vielzahl von Ausgangsanschlüssen (11), eine jeweilige Leistungsregulierungseinheit (12), die mit dem jeweiligen Ausgangsanschluss (11) verbunden ist, und eine jeweilige Steuereinheit (14), die mit der jeweiligen Leistungsregulierungseinheit (12) verbunden ist;
das Verfahren (4) umfassend:
Ausgeben (41), durch einen Master (14M) der Steuereinheiten (14), von Zielwerten (17V, 17C) für jeweilige Sollwertvariablen (15V, 15C) für elektrische Ausgangsmerkmale (13V, 13C) des jeweiligen Ausgangsanschlusses (11), die elektrischen Ausgangsmerkmale (13V, 13C) umfassend eine Ausgangsspannung (13V) und einen Ausgangsstrom (13C); und
Setzen (42) der jeweiligen Sollwertvariablen (15V, 15C);
Regulieren (43) der elektrischen Ausgangsmerkmale (13V, 13C) des jeweiligen Ausgangsanschlusses (11) unabhängig von den elektrischen Ausgangsmerkmalen (13V, 13C) eines beliebigen anderen der Vielzahl von Ausgangsanschlüssen (11);
Anpassen (44), durch die jeweilige Steuereinheit (14), der gesetzten Sollwertvariable (15V, 15C) für eines der elektrischen Ausgangsmerkmale (13V, 13C) in Abhängigkeit von einer Abweichung des anderen der elektrischen Ausgangsmerkmale (13C, 13V) von seinem Zielwert (17C, 17V), und gemäß einer gegebenen Sequenz der Steuereinheiten (14).

## Revendications

1. Alimentation électrique (1), comprenant
une pluralité de ports de sortie (11) ;
une unité de régulation de puissance (12) respective connectée au port de sortie (11) respectif et configurée pour réguler des caractéristiques de sortie électrique (13V, 13C) du port de sortie (11) respectif indépendamment des caractéristiques de sortie électrique (13V, 13C) de tout autre port de sortie parmi la pluralité de ports de sortie (11), les caractéristiques de sortie électrique (13V, 13C) comprenant une tension de sortie (13V) et une un courant de sortie (13C) ;
une unité de commande (14) respective connectée à l'unité de régulation de puissance (12) respective et configurée pour régler des variables de point de consigne (15V, 15C) respectives du port de sortie (11) respectif ;
un maître (14M) des unités de commande (14) configuré pour émettre des valeurs cibles (17V, 17C) pour les variables de point de consigne (15V, 15C) respectives ; et
l'unité de commande (14) respective étant configurée pour adapter la variable de point de consigne (15V, 15C) pour l'une de ses caractéristiques de sortie électrique (13V, 13C) en fonction d'un écart de l'autre de ses caractéristiques de sortie électrique (13C, 13V) par rapport à sa valeur cible (17C, 17V) ;
**caractérisée par** l'unité de commande (14) respective configurée pour adapter le variable de point de consigne (15V, 15C) pour l'une de ses caractéristiques de sortie électrique (13V, 13C) conformément à une séquence donnée des unités de commande (14).

2. Alimentation électrique (1) selon la revendication 1,
les ports de sortie (11) étant interconnectés en parallèle ; et
l'unité de commande (14) respective est configurée pour adapter la variable de point de consigne (15V) pour la tension de sortie (13V) respective en fonction d'un écart de la courant de sortie (13C) respective par rapport à sa valeur cible (17C).

3. Alimentation électrique (1) selon la revendication 1,
les ports de sortie (11) étant interconnectés en série ; et
l'unité de commande (14) respective étant configurée pour adapter la variable de point de consigne (15C) pour le courant de sortie (13C) respectif en fonction d'un écart de la tension de sortie (13V) respective par rapport à sa valeur cible (17V).

4. Alimentation électrique (1) selon l'une quelconque des revendications précédentes,
les ports de sortie (11) comprenant l'un parmi : des ports de sortie en courant alternatif, CA, et des ports de sortie en courant continu, CC.

5. Alimentation électrique (1) selon l'une quelconque des revendications précédentes,
l'unité de commande (14) respective comprenant l'un parmi : un micro dispositif de commande et une logique de réseau de portes.

6. Alimentation électrique (1) selon l'une quelconque des revendications précédentes, comprenant en outre une isolation galvanique (18) entre les unités de commande (14).

7. Alimentation électrique (1) selon la revendication 6,
des moyens de communication (16) étant conçus pour interconnecter les unités de commande (14) à travers l'isolation galvanique (18).

8. Alimentation électrique (1) selon la revendication 7,
les moyens de communication (16) étant en outre conçus pour interconnecter les unités de régulation de puissance (12).

9. Alimentation électrique (1) selon la revendication 7 ou la revendication 8,
les moyens de communication (16) comprenant un bus étant configurés pour une communication en temps réel en moins d'un temps de stabilisation des unités de régulation de puissance (12).

10. Alimentation électrique (1) selon la revendication 9,
le bus comprenant l'un parmi un bus CAN, un bus MOST et un bus LIN.

11. Alimentation électrique (1) selon la revendication 9 ou la revendication 10, le bus comprenant un bus optique.

12. Alimentation électrique (1) selon la revendication 9 ou la revendication 10,
le bus comprenant un bus électrique comportant un ou plusieurs parmi : un opto-coupleur et un couplage capacitif.

13. Procédé (4) de fonctionnement d'une alimentation électrique (1), l'alimentation électrique (1) comprenant :
une pluralité de ports de sortie (11), une unité de régulation de puissance (12) respective connectée au port de sortie (11) respectif, et une unité de commande (14) respective connectée à l'unité de régulation de puissance (12) respective ;
le procédé (4) comprenant :
l'émission (41), par un maître (14M) des unités de commande (14), de valeurs cibles (17V, 17C) pour des variables de point de consigne (15V, 15C) respectives pour des caractéristiques de sortie électrique (13V, 13C) du port de sortie (11) respectif, les caractéristiques de sortie électrique (13V, 13C) comprenant une tension de sortie (13V) et un courant de sortie (13C) ; et
le réglage (42) des variables de point de consigne (15V, 15C) respectives ;
la régulation (43) des caractéristiques de sortie électrique (13V, 13C) du port de sortie (11) respectif indépendamment des caractéristiques de sortie électrique (13V, 13C) de tout autre port de sortie parmi la pluralité de ports de sortie (11) ;
l'adaptation (44), par l'unité de commande (14) respective, de la variable de point de consigne (15V, 15C) pour l'une des caractéristiques de sortie électrique (13V, 13C) en fonction d'un écart de l'autre des caractéristiques de sortie électrique (13C, 13V) par rapport à sa valeur cible (17C, 17V), et conformément à une séquence donnée des unités de commande (14).
